# EUROPÄISCHE PATENTSCHRIFT

(11) **EP 3 928 012 B1**
(45) Veröffentlichungstag und Bekanntmachung des Hinweises auf die Patenterteilung: **22.01.2025**
(21) Anmeldenummer: 20708444.3
(22) Anmeldetag: 20.02.2020
(51) Int. Cl.: F16K 27/00, F16K 7/12, F16L 15/00, F16L 39/00, F16K 27/02, F16K 11/22

(54) **MODULARES VENTILKÖRPERSYSTEM**
MODULAR VALVE BODY SYSTEM
SYSTÈME DE CORPS DE SOUPAPE MODULAIRE

(30) Priorität: 21.02.2019 DE 102019104490
(43) Veröffentlichungstag der Anmeldung: 29.12.2021
(73) Patentinhaber: GEMÜ Gebr. Müller Apparatebau GmbH & Co. Kommanditgesellschaft, 74653 Ingelfingen (DE)
(72) Erfinder: SIFER, Kevin, 74523 Schwäbisch Hall (DE); KILIAN, Lena, 74214 Bieringen (DE); MATTER, Simon, 74747 Ravenstein (DE)
(74) Vertreter: DREISS Patentanwälte PartG mbB
(86) Internationale Anmeldenummer: PCT/EP2020/054533
(87) Internationale Veröffentlichungsnummer: WO 2020/169763

(56) Entgegenhaltungen:
- WO-A1-2017/063707
- DE-C1- 19 725 999
- DE-U1- 202013 002 441
- GB-A- 854 133

## Beschreibung

Die Erfindung betrifft ein modulares Ventilkörpersystem.

DE 20 2013 002 441 U1 offenbart bereits ein modulares Ventilkörpersystem gemäß dem Oberbegriff von Anspruch 1.

WO 2017/063707 A1 offenbart eine Ventileinrichtung zur Beeinflussung eines Fluidstroms, mit einem Grundkörper, der eine Ventilausnehmung zur Aufnahme eines beweglich gelagerten Ventilkörpers aufweist und der von wenigstens zwei Fluidkanälen durchsetzt ist, die sich zwischen der Ventilausnehmung und Anschlussausnehmungen in Außenflächen des Grundkörpers erstrecken, wobei die beiden Fluidkanäle einen Winkel von weniger als 180 Grad, insbesondere von 90 Grad, einnehmen und jeweils an einem der Ventilausnehmung zugewandten Endbereich einen Ventilsitz (34) aufweisen, der für eine abdichtende Anlage eines Ventilkörpers ausgebildet ist, und mit einer Antriebseinrichtung, die einen Aktor und einen dem Aktor zugeordneten, beweglich gelagerten Ventilkörper umfasst.

Ventilblöcke umfassen bekanntlich materialschlüssig mit dem Material des Ventilblocks verbundene Anschlüsse. Rohrleitungen werden direkt mit den vorgenannten Anschlüssen verbunden.

Mithin ist es Aufgabe der Erfindung, die bekannten Ventilblöcke bzw. Ventilkörper zu verbessern.

Die der Erfindung zugrunde liegende Aufgabe wird durch ein modulares Ventilkörpersystem gemäß dem Anspruch 1 gelöst. Vorteilhafte Weiterbildungen sind in den Unteransprüchen angegeben.

Mittels der ersten und zweiten Anschlussgeometrien wird also eine vereinheitlichte Schnittstelle zwischen dem Ventilkörper und den Anschlussadaptern bereitgestellt, womit der Ventilkörper und die Anschlussadapter unabhängig voneinander fertigbar sind. Vorteilhaft ergeben sich somit Freiheitsgrade bei der Gestaltung der dritten Anschlussgeometrie, des Anschlussfluidkanals und der vom Ventilkörper abgewandten Adapteröffnung. Die dritte Anschlussgeometrie kann beispielsweise einen Stutzen, einen Schweißabschnitt oder eine andere Geometrie umfassen - je nach gewünschter Anschlussart zwischen dem jeweiligen Anschlussadapter und einem Rohrstück.

Das modulare Ventilkörpersystem bietet insbesondere bei Ventilblöcken, welche mehrere Ventilsitze und mehr als zwei Fluidkanalöffnungen bereitstellen, umfassende Vorteile. So verringert die Fertigung von Standardblöcken mit höherer Stückzahl den Konstruktionsaufwand sowie die Rüst- und Fertigungskosten. Die Angebots- und Lieferzeiten werden deutlich gesenkt, da das Baukastenprinzip eine Lagerfertigung ermöglicht. Eine frühzeitige Bestellung durch den Kunden ist somit bereits während der Planungsphase einer Anlage möglich, da die endgültige Zusammenstellung zu einem späteren Zeitpunkt erfolgen kann. Wird ein Adapteranschluss nicht mehr benötigt oder wird er beschädigt, kann dieser mit geringem Montageaufwand getauscht werden. Die Ausführung der Adapteranschlüsse als separate Bauteile verringert das Zerspanungsvolumen sowie die Zerspanungszeit und führt somit zu fertigungstechnischen sowie umwelttechnischen Vorzügen.

Ein vorteilhaftes Beispiel zeichnet sich dadurch aus, dass die wenigstens zwei Anschlussadapter lösbar zu dem Ventilkörper festgelegt sind. Vorteilhaft können defekte Anschlussadapter ausgetauscht werden. Auch können fehlerhaft angeordnete Anschlussadapter mit einer nicht passenden dritten Anschlussgeometrie gegen einen anderen Anschlussadapter mit passender dritter Anschlussgeometrie ausgetauscht werden.

Erfindungsgemäß umfassen Festlegungsabschnitte der ersten Anschlussgeometrie und der zweiten Anschlussgeometrie ineinandergreifende Gewinde. Das Vorsehen ineinandergreifender Gewinde ermöglicht die ausziehsichere Festlegung der Anschlussadapter.

Erfindungsgemäß umfasst der jeweilige Anschlussadapter eine laterale Angriffskontur für ein Werkzeug. Mittels des Werkzeugs, welches an der Angriffskontur angreift, lässt sich der jeweilige Anschlussadapter mit dem gewünschten Drehmoment zu dem Ventilkörper festlegen.

Ein vorteilhaftes Beispiel zeichnet sich dadurch aus, dass eine jeweilige Ausnehmung in dem Ventilkörper die jeweilige erste Anschlussgeometrie bereitstellt, und wobei die jeweilige Ausnehmung zu der jeweiligen Fluidkanalöffnung des Ventilkörpers führt. Die Bereitstellung der ersten Anschlussgeometrie mittels einer Ausnehmung bietet den Vorteil, dass vom Ventilkörper abstehende Abschnitte vermieden werden. Darüber hinaus ist die Ausnehmung aus fertigungstechnischer Sicht einfach in den Ventilkörper einzubringen.

Ein vorteilhaftes Beispiel zeichnet sich dadurch aus, dass ein jeweiliger der Anschlussadapter mit seiner zweiten Anschlussgeometrie in die jeweilige Ausnehmung eingebracht ist. Dadurch wird die Festlegung des Anschlussadapters bauraumeffizient innerhalb des Ventilkörpers realisiert.

Ein Dichtabschnitt der ersten oder zweiten Anschlussgeometrie hält ein elastisches Dichtelement, welches die erste oder zweite Anschlussgeometrie kreisringförmig umgibt. Durch das elastische Dichtelement in Form eines Elastomer-O-Rings wird die Dichtheit des modularen Ventilsystems nach außen sichergestellt.

Ein vorteilhaftes Beispiel zeichnet sich dadurch aus, dass eine Dichtung zwischen der ersten und zweiten Anschlussgeometrie elastomerfrei ausgeführt ist. Durch die elastomerfreie Dichtung können auch hochsensible Prozessmedien verarbeitet werden.

Ein vorteilhaftes Beispiel zeichnet sich dadurch aus, dass ein bzw. der Dichtabschnitt der ersten oder zweiten Anschlussgeometrie eine parallel zu einer Längsachse des Anschlussadapters erhabene Dichtkontur umfasst, und wobei ein bzw. der Dichtabschnitt der zweiten oder ersten Anschlussgeometrie eine einer gedachten Lotebene der Längsachse folgende Anlagefläche für die Dichtkontur umfasst. Über die erhabene Dichtkontur wird die elastomerfreie Dichtung realisiert. In Verbindung mit den ineinandergreifenden Gewinden wird der jeweilige Anschlussadapter auf Block angezogen und damit die Dichtung bereitgestellt.

Ein vorteilhaftes Beispiel zeichnet sich dadurch aus, dass ein jeweiliger bzw. der jeweilige Dichtabschnitt zwischen der Fluidkanalöffnung und dem Befestigungsabschnitt angeordnet ist. Vorteilhaft wird damit sichergestellt, dass der Befestigungsabschnitt nicht mit Prozessfluid in Kontakt kommt. Die sichere Festlegung der Anschlussadapter an dem Ventilkörper wird somit gewährleistet.

Ein vorteilhaftes Beispiel zeichnet sich dadurch aus, dass das Ventilkörpersystem wenigstens einen Verschlussadapter mit einer dem Ventilkörper zugewandten vierten Anschlussgeometrie umfasst, wobei der Verschlussadapter die zugeordnete Fluidkanalöffnung verschließt, und wobei der Verschlussadapter mittels der ersten und der vierten Anschlussgeometrie ausziehsicher zu dem Ventilkörper festgelegt ist.

Ein erfindungsgemäßes Ausführungsbeispiel zeichnet sich dadurch aus, dass der Ventilkörper ein Ventilblock ist, und wenigstens zwei Ventilsitze und wenigstens drei Fluidkanalöffnungen umfasst. Weitere Vorteile und Merkmale finden sich in der nachfolgenden Beschreibung von Ausführungsbeispielen, wobei auch für unterschiedliche Ausführungsformen die gleichen Bezugszeichen verwendet werden, ohne dass hierauf nochmals explizit hingewiesen wird. In der Zeichnung zeigen:
- Figur 1: ein modulares Ventilkörpersystem in einer schematischen Ansicht;
- Figur 2: einen Anschlussadapter zur Anordnung an einem Ventilkörper in perspektivischer Ansicht;
- Figur 3: einen schematischen Schnitt von Beispielen des Ventilkörpersystems;
- Figur 4: ein Beispiel für Dichtabschnitte; und
- Figur 5: in einem Beispiel das modulare Ventilkörpersystem.

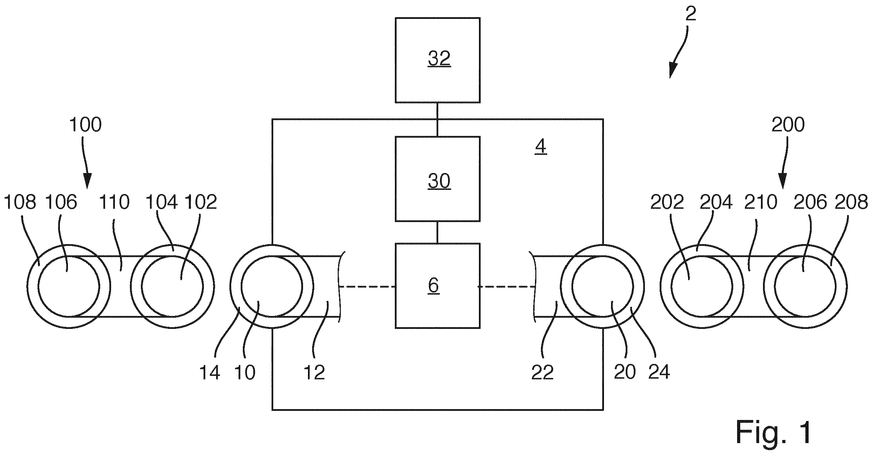

Figur 1 zeigt ein modulares Ventilkörpersystem 2. Das Ventilkörpersystem 2 umfasst einen Ventilkörper 4, insbesondere einen Ventilblock, und eine Mehrzahl von Anschlussadaptern 100, 200. Der Ventilkörper 4 umfasst wenigstens einen Ventilsitz 6 und wenigstens zwei Fluidkanalöffnungen 10, 20 jeweiliger Fluidkanäle 12, 22. Die Fluidkanäle 12, 22 sind unmittelbar oder mittelbar mit dem Ventilsitz 6 verbunden. An die Fluidkanalöffnung 10, 20 schließt sich eine erste Anschlussgeometrie 14, 24 an. Die erste Anschlussgeometrie 14, 24 umgibt also die Fluidkanalöffnung 10, 20.

Der jeweilige Anschlussadapter 100, 200 umfasst eine dem Ventilkörper 4 zugewandte Fluidkanalöffnung 102, 202, an welche sich eine zweite Anschlussgeometrie 104, 204 anschließt. Der Anschlussadapter 100, 200 umfasst eine von dem Ventilkörper 4 abgewandte Fluidkanalöffnung 106, 206, an welche sich eine dritte Anschlussgeometrie 108,208 zum Anschluss eines Rohres anschließt. Ein Fluidkanal 110, 210 verbindet die Fluidkanalöffnung 102, 202 fluidführend mit der Fluidkanalöffnung 106, 206. Die erste Anschlussgeometrie 14, 24 komplementiert die zweite Anschlussgeometrie 104, 204 dahingehend, als dass der Anschlussadapter 100, 200 ausziehsicher zu dem Ventilkörper 4 festgelegt ist und die Öffnungen 10 und 102 bzw. 20 und 202 so aneinander anliegen, dass die Fluidkanäle 12 und 110 bzw. 22 und 210 einen gemeinsamen Fluidkanal bis zur jeweiligen Fluidkanalöffnung 106, 206 bilden. Die erste Anschlussgeometrie 14, 24 komplementiert die zweite Anschlussgeometrie 104, 204 dahingehend, als dass der geschaffene gemeinsame Fluidkanal nach außen hin fluiddicht abgedichtet ist.

Ein Absperrelement 30 wie beispielsweise eine Membran wird von einem Antrieb 32 angetrieben und wirkt mit dem Ventilsitz 6 so zusammen, dass ein durch den Ventilkörper 4 fließender Strom eines Prozessfluids begrenzt wird. Selbstverständlich ist die gezeigte Darstellung nur beispielhaft, was die Anzahl der Sitze und die Anzahl der Fluidkanalöffnungen in dem Ventilkörper 4 angeht.

Die erste Anschlussgeometrie 14, 24 des Ventilkörpers 4 ist gleich ausgebildet und gleich dimensioniert, um einen der Anschlussadapter 100, 200 mittels der zweiten Anschlussgeometrie 104, 204 aufzunehmen. Mithin ist ebenfalls die zweite Anschlussgeometrie 104, 204 gleich ausgebildet und gleich dimensioniert. Die der ersten Anschlussgeometrie 14, 24 handelt es sich also um eine erste geometrische Kontur an mehreren voneinander beabstandeten Abschnitten des Ventilblocks 4, welche mit der zweiten Anschlussgeometrie 104 und 204 im Sinne einer zweiten geometrischen Kontur des jeweiligen Anschlussadapters 100, 200 so zusammenwirkt, dass die gewünschte dritte Anschlussgeometrie 108, 208 bereitgestellt wird. Damit korrespondieren die ersten Anschlussgeometrien 14, 24 zueinander. Die zweiten Anschlussgeometrien 104, 204 korrespondieren zueinander. Selbstverständlich können weitere aufeinander abgestimmte erste und zweite Anschlussgeometrien vorhanden sein, um beispielsweise unterschiedlich dimensionierte Fluidkanaldurchmesser und/oder -öffnungen an demselben Ventilkörper 4 zu realisieren.

Das Ventilkörpersystem 2 kann in einer Ausführungsform einen Verschlussadapter aufweisen, welcher mittels einer vierten Anschlussgeometrie in die erste Anschlussgeometrie 14, 24 eingreift und die Fluidkanalöffnung 10, 20 fluiddicht verschließt.

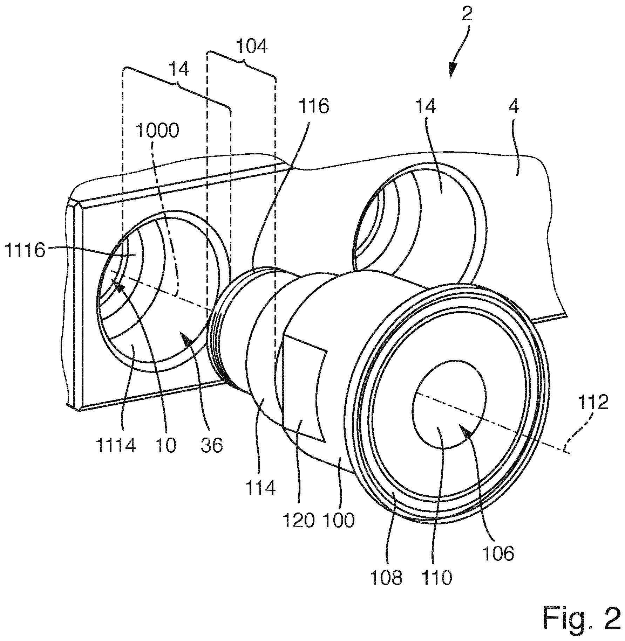

Figur 2 zeigt eine perspektivische Darstellung des Anschlussadapters 100 zur Anordnung an der Fluidkanalöffnung 10. Der Fluidkanal 110 verläuft entlang einer Längsachse 112 des Anschlussadapters 100. Die zweite Anschlussgeometrie 104 ist dem Ventilkörper 4 zugewandt und umfasst einen Festlegungsabschnitt 114 sowie einen Dichtabschnitt 116.

Die erste Anschlussgeometrie 14 ist als Ausnehmung 36 in dem Ventilkörper 4 ausgebildet, sodass die zweite Anschlussgeometrie 104 in die Ausnehmung 36 im verbauten Zustand hineinragt. Die erste Anschlussgeometrie 14 umfasst einen Festlegungsabschnitt 1114 und einen Dichtabschnitt 1116. Die Festlegungsabschnitte 114 und 1114 sind vorliegend als Gewinde ausgebildet, welche ineinandergreifen. Durch die Ausführung der Festlegungsabschnitte 114 und 1114 als ineinandergreifende Gewinde ist der Anschlussadapter 100 lösbar an dem Ventilkörper 4 angeordnet. Die Verbindung zwischen dem Anschlussadapter 100 und dem Ventilkörper 4 wird alternativ oder zusätzlich durch wenigstens eine der folgenden Verbindungsarten erreicht: Bajonett-Verschluss, ein Spannring, eine Einclips-Verbindung, die Verbindung mit einer Überwurfmutter, Schweißen und Kleben.

Der Dichtabschnitt 116 umfasst eine laterale Ringnut, in welcher ein O-Ring 126 als elastisches Dichtelement angeordnet ist. Dieser O-Ring wirkt mit einer Zylindermantelinnenfläche des Dichtabschnitts 1116 derart zusammen, dass die Dichtheit des Ventilkörpersystems 2 nach außen gewährleistet ist.

Die erste Anschlussgeometrie 14 ist im Wesentlichen rotationssymmetrisch um eine Längsachse 1000 ausgebildet. Die Längsachsen 1000 und 112 fallen im verbauten Zustand des Anschlussadapters 100 zusammen. Die dritte Anschlussgeometrie 108 ist vorliegend eine Clamp-Anschlussgeometrie, welche auf Stutzenbasis realisiert wird. Selbstverständlich kann alternativ ein Schweißanschluss in Rohrform bzw. Stutzenform Teil der dritte Anschlussgeometrie 108 sein. Des Weiteren umfasst den Anschlussadapter 100 eine laterale Angriffskontur 120, an welche ein Werkzeug angreifen kann, um durch eine Drehung des Anschlussadapters 100 um die Längsachse 112 eine Montage oder Demontage des Anschlussadapters 100 durchzuführen.

Alternativ zu dem dargestellten Beispiel ist in einem weiteren Beispiel die erste Anschlussgeometrie 14 an einem von dem Ventilkörper 4 abragenden Vorsprung angeordnet und der Anschlussadapter 100 weist eine Ausnehmung mit der zweiten Anschlussgeometrie 104 auf.

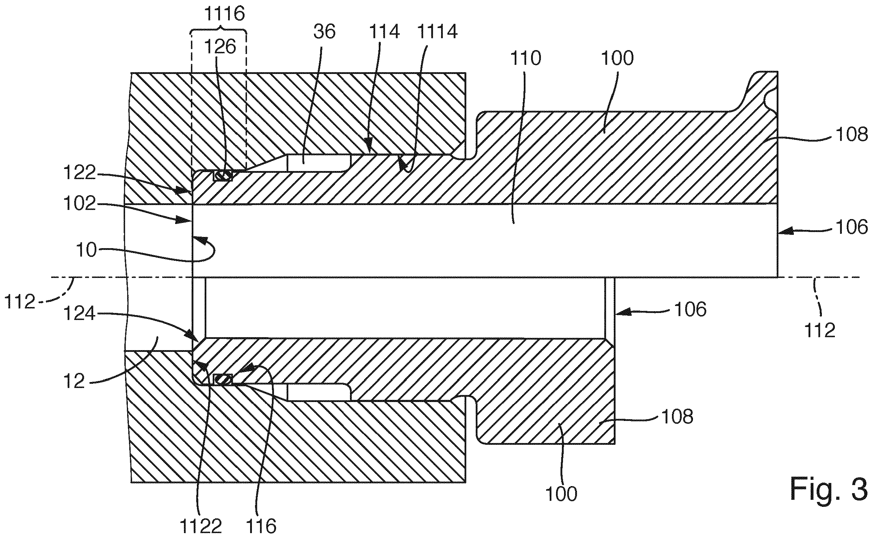

Figur 3 zeigt eine perspektivische Darstellung zweier Beispiele des Anschlussadapters 100. Die beiden Beispiele sind entlang der Längsachse 112 voneinander getrennt. Aus Gründen der Übersichtlichkeit werden die gleichen Bezugszeichen für beide Beispiele verwendet. Die obere Hälfte zeigt den Anschlussadapter 100 aus Figur 2. Der O-Ring 126 ist in einer lateralen umfänglichen Ringnut des Dichtabschnitts 116 angeordnet. Die Ausnehmung 36 verjüngt sich ausgehend von dem Festlegungsabschnitte 1114 hin zu dem Dichtabschnitt 1116. Der Dichtabschnitt 116 und der Festlegungsabschnitt 114 sind damit voneinander beabstandet. Eine distale kreisringförmige Fläche 122 der zweiten Anschlussgeometrie des Anschlussadapters 100 liegt an einer kreisringförmigen Fläche 1122 der ersten Anschlussgeometrie des Ventilkörpers 4.

Die untere Hälfte der Figur 3 zeigt den Anschlussadapter 100 in einer weiteren nicht beanspruchten Ausführungsform. Die dritte Anschlussgeometrie 108 ist gegenüber der Anschlussgeometrie 108 des Ausführungsbeispiels aus Figur 2 verkürzt. Des Weiteren ist der Durchmesser des Fluidkanals 110 gegenüber dem Durchmesser des Fluidkanals 12 verringert. Unmittelbar an die Öffnung 102 schließt sich eine Fase 124 an, welche eine Durchmesserverjüngung im Bereich des Fluidkanals 110 bereitstellt. Die Fase 124 dient zur Strömungsoptimierung.

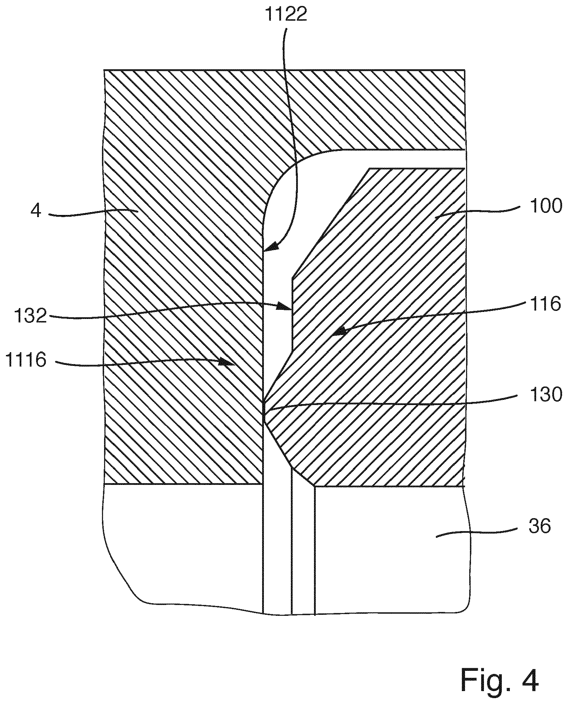

Figur 4 zeigt ein Beispiel der Dichtabschnitte 116 und 1116. Der Dichtabschnitt 1116 der ersten Anschlussgeometrie des Ventilkörpers 4 wird durch die Fläche 1122 bereitgestellt, welche einer gedachten Lotebene der Längsachse der Ausnehmung 36 folgt. Der Dichtabschnitt 116 des Anschlussadapters 100 stellt eine kreisringförmige erhabene Dichtkontur 130 bereit, welche über das Eindrehen des Anschlussadapters 100 in die Ausnehmung 36 auf die Fläche 1122, welche auch als Anlagefläche bezeichenbar ist, gedrückt wird. Die Dichtkontur 130 steht gegenüber einer diese umgebenden Fläche 132 hervor und bildet damit ein distales Ende des Anschlussadapters 100. Damit wird eine elastomerfreie Dichtung bereitgestellt. Dieses Beispiel der Dichtabschnitte 116 und 1116 ist selbstverständlich mit der Ausführung gemäß der Figur 3 kombinierbar.

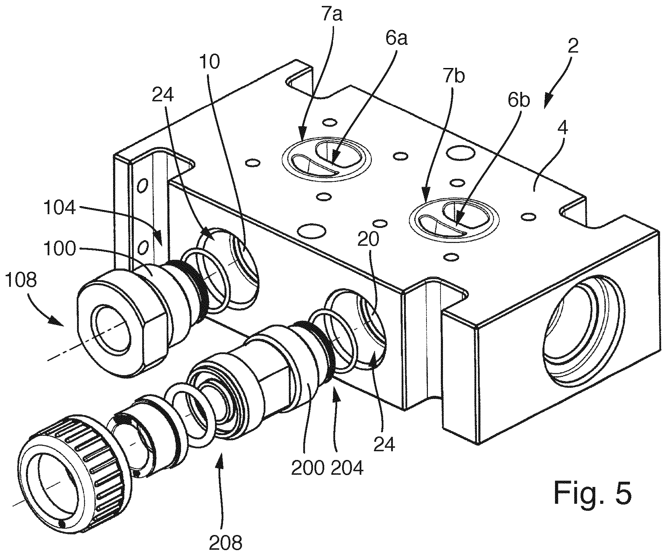

Figur 5 zeigt in einem Beispiel das modulare Ventilkörpersystem 2, wobei der Ventilkörper 4 ein Ventilblock ist. Die Ventilsitze 6a und 6b sind über jeweilige Öffnungen 7a und 7b des Ventilkörpers 4 zugänglich. Die jeweilige Fluidkanalöffnung 10, 20 ist fluidführend mit dem jeweiligen Ventilsitz 6a, 6b verbunden. Die beiden Anschlussadapter 100 und 200 sind hinsichtlich ihrer zweiten Anschlussgeometrie 104, 204 gleich ausgebildet. Die dritten Anschlussgeometrien 108 und 208 unterscheiden sich jedoch voneinander. Die ersten Anschlussgeometrien 14, 24 und die zweiten Anschlussgeometrien 104, 204 sind hingegen derart ausgestaltet, dass die beiden Anschlussadapter 100 und 200 mit ihrer jeweiligen zweiten Anschlussgeometrie in der jeweils anderen ersten Anschlussgeometrie 24, 14 ausziehsicher anordenbar sind.

## Patentansprüche

1. Ein modulares Ventilblocksystem (2),
bei dem eine Membran von einem Antrieb (32) angetrieben wird und mit einem jeweiligen von zwei Ventilsitzen (6) so zusammenwirkt, dass ein durch einen Ventilblock (4) fließender Strom eines Prozessfluids begrenzt wird,
das modulare Ventilblocksystem (2) umfassend:
- den Ventilblock (4), der wenigstens die zwei Ventilsitze (6) und wenigstens drei Fluidkanalöffnungen (10, 20) jeweiliger Fluidkanäle (12, 22), welche fluidführend mit einem jeweiligen der Ventilsitze (6) verbunden sind, umfasst, wobei eine erste Anschlussgeometrie (14; 24) sich an die jeweilige Fluidkanalöffnung (10; 20) anschließt, und
- wenigstens drei Anschlussadapter (100, 200), wobei ein jeweiliger der Anschlussadapter (100; 200) zwei über einen Anschlussfluidkanal (110; 210) miteinander verbundene Fluidkanalöffnungen (102, 106; 202, 206) umfasst,
wobei eine zweite Anschlussgeometrie (104; 204) sich an die dem Ventilblock (4) zugewandte Fluidkanalöffnung (102; 202) des jeweiligen Anschlussadapters (100; 200) anschließt, wobei eine dritte Anschlussgeometrie (108; 208) sich an die von dem Ventilblock (4) abgewandte Fluidkanalöffnung (106; 206) des jeweiligen Anschlussadapters (100; 200) anschließt, wobei Festlegungsabschnitte (114, 1114) der ersten Anschlussgeometrie (14; 24) und der zweiten Anschlussgeometrie (104; 204) ineinandergreifende Gewinde umfassen, die den jeweiligen Anschlussadapter (100; 200) ausziehsicher zu dem Ventilblock (4) festlegen,
wobei ein Dichtabschnitt (1116; 116) der ersten oder zweiten Anschlussgeometrie (14; 104; 24; 204) ein elastisches Dichtelement (126) hält, das ein O-Ring ist, und
wobei die jeweilige Fluidkanalöffnung (10, 20) des Ventilblocks (4) und die dem Ventilblock (4) zugewandte Fluidkanalöffnung (102, 202) des jeweiligen Anschlussadapters (100, 200) so aneinander anliegen, dass die der jeweilige Fluidkanal (12, 22) des Ventilblocks (4) und der Anschlussfluidkanal (110; 210) des Anschlussadapters (100, 200) einen gemeinsamen Fluidkanal bis zur von dem Ventilblock (4) abgewandten Fluidkanalöffnung (106, 206) des Anschlussadapters (100, 200) bilden,
**dadurch gekennzeichnet, dass**
das elastische Dichtelement die erste oder zweite Anschlussgeometrie (14; 104; 24; 204) kreisringförmig umgibt,
dass der Dichtabschnitt (1116; 116) eine laterale Ringnut umfasst, in der der O-Ring angeordnet ist, der mit einer Zylindermantelinnenfläche des Dichtabschnitts (1116; 116) derart zusammenwirkt, dass die Dichtheit des Ventilblocksystems (2) nach außen gewährleistet ist, dass der jeweilige Anschlussadapter (100; 200) eine laterale Angriffskontur (120) für ein Werkzeug umfasst, mittels der sich der jeweilige Anschlussadapter (100; 200) mit dem gewünschten Drehmoment zu dem Ventilblock (4) festlegen lässt,
dass an der lateralen Angriffskontur (120) das Werkzeug angreifen kann, um durch eine Drehung des Anschlussadapters (100), der zweiten Anschlussgeometrie (104), des Festlegungsabschnitts (114) sowie des Dichtabschnitts (116) um eine Längsachse (112) eine Montage oder Demontage des Anschlussadapters (100) durchzuführen, und
dass der Fluidkanal (12, 22) des Ventilblocks (4) und der zugeordnete Anschlussfluidkanal (110; 210) des Anschlussadapters (100, 200) bündig ineinander übergehen.

2. Das modulare Ventilblocksystem (2) gemäß dem Anspruch 1, wobei die wenigstens drei Anschlussadapter (100, 200) lösbar zu dem Ventilblock (4) festgelegt sind.

3. Das modulare Ventilblocksystem (2) gemäß einem der vorigen Ansprüche, wobei eine jeweilige Ausnehmung (36) in dem Ventilblock (4) die jeweilige erste Anschlussgeometrie (14; 24) bereitstellt, und wobei die jeweilige Ausnehmung (36) zu der jeweiligen Fluidkanalöffnung (10; 20) des Ventilblocks (4) führt.

4. Das modulare Ventilblocksystem (2) gemäß dem Anspruch 3, wobei ein jeweiliger der Anschlussadapter (100; 200) mit seiner zweiten Anschlussgeometrie (104; 204) in die jeweilige Ausnehmung (36) eingebracht ist.

5. Das modulare Ventilblocksystem (2) gemäß einem der vorigen Ansprüche, wobei eine Dichtung zwischen der ersten und zweiten Anschlussgeometrie (14, 104; 24, 204) elastomerfrei ausgeführt ist.

6. Das modulare Ventilblocksystem (2) gemäß einem der vorigen Ansprüche, wobei ein bzw. der Dichtabschnitt (1116; 116) der ersten oder zweiten Anschlussgeometrie (14; 104; 24; 204) eine parallel zu einer Längsachse (112) des Anschlussadapters (100) erhabene Dichtkontur (130) umfasst, und wobei ein bzw. der Dichtabschnitt (1116; 116) der zweiten oder ersten Anschlussgeometrie (24; 204; 14; 104) eine einer gedachten Lotebene der Längsachse (112) folgende Anlagefläche (1122) für die Dichtkontur (130) umfasst.

7. Das modulare Ventilblocksystem (2) gemäß einem der vorigen Ansprüche, wobei ein jeweiliger bzw. der jeweilige Dichtabschnitt (1116; 116) zwischen der Fluidkanalöffnung (10; 102) und dem Befestigungsabschnitt (1114; 114) angeordnet ist.

8. Das modulare Ventilblocksystem (2) gemäß einem der vorstehenden Ansprüche, wobei das Ventilblocksystem (2) wenigstens einen Verschlussadapter mit einer dem Ventilblock (4) zugewandten vierten Anschlussgeometrie umfasst, wobei der Verschlussadapter die zugeordnete Fluidkanalöffnung (10; 20) des Ventilblocks (4) verschließt, und wobei der Verschlussadapter mittels der ersten und der vierten Anschlussgeometrie ausziehsicher zu dem Ventilblock (4) festgelegt ist.

9. Das modulare Ventilblocksystem (2) gemäß dem Anspruch 1, wobei der Durchmesser des Fluidkanals (12, 22) des Ventilblocks (4) größer ist als der der Durchmesser des zugeordneten Anschlussfluidkanals (110; 210) des Anschlussadapters (100, 200).

## Claims

1. A modular valve block system (2),
in which a membrane is driven by a drive (32) and interacts with each one of two valve seats (6) such that a flow of a process fluid flowing through a valve block (4) is limited,
the modular valve block system (2) comprising:
- the valve block (4) comprising at least the two valve seats (6) and at least three fluid channel openings (10, 20) of respective fluid channels (12, 22) which are connected in a fluid-conducting manner to each one of the valve seats (6), wherein a first connection geometry (14; 24) adjoins each fluid channel opening (10; 20), and
- at least three connection adapters (100, 200), wherein each one of the connection adapters (100; 200) comprises two fluid channel openings (102, 106; 202, 206) which are connected to one another via a connection fluid channel (110; 210),
wherein a second connection geometry (104; 204) adjoins the fluid channel opening (102; 202) of each connection adapter (100; 200) facing the valve block (4), wherein a third connection geometry (108; 208) adjoins the fluid channel opening (106; 206) of each connection adapter (100; 200) facing away from the valve block (4), wherein attachment portions (114, 1114) of the first connection geometry (14; 24) and the second connection geometry (104; 204) comprise threads which engage in one another and attach each connection adapter (100; 200) to the valve block (4) in a pull-out-proof manner, wherein a sealing portion (1116; 116) of the first or second connection geometry (14; 104; 24; 204) holds a resilient sealing element (126) which is an O-ring, and
wherein each fluid channel opening (10, 20) of the valve block (4) and the fluid channel opening (102, 202) of each connection adapter (100, 200) facing the valve block (4) abut one another in such a way that each fluid channel (12, 22) of the valve block (4) and the connection fluid channel (110; 210) of the connection adapter (100, 200) form a common fluid channel up to the fluid channel opening (106, 206) of the connection adapter (100, 200) facing away from the valve block (4),
**characterized in that**
the resilient sealing element surrounds the first or second connection geometry (14; 104; 24; 204) in a circular ring shape, **in that** the sealing portion (1116; 116) comprises a lateral annular groove in which the O-ring is arranged, which cooperates with an inner curved cylinder surface of the sealing portion (1116; 116) in such a way that the tightness of the valve block system (2) to the outside is ensured,
**in that** each connection adapter (100; 200) comprises a lateral engagement contour (120) for a tool,
by means of which each connection adapter (100; 200) can be attached to the valve block (4) with the desired torque,
**in that** the tool can engage the lateral engagement contour (120) in order to carry out assembly or disassembly of the connection adapter (100) by rotating the connection adapter (100), the second connection geometry (104), the attachment portion (114) and the sealing portion (116) about a longitudinal axis (112), and
**in that** the fluid channel (12, 22) of the valve block (4) and the associated connection fluid channel (110; 210) of the connection adapter (100, 200) merge flush into one another.

2. The modular valve block system (2) according to claim 1, wherein the at least three connection adapters (100, 200) are detachably attached to the valve block (4).

3. The modular valve block system (2) according to one of the preceding claims, wherein each recess (36) in the valve block (4) provides each first connection geometry (14; 24), and wherein each recess (36) leads to each fluid channel opening (10; 20) of the valve block (4).

4. The modular valve block system (2) according to claim 3, wherein each one of the connection adapters (100; 200) is introduced into each recess (36) by its second connection geometry (104; 204).

5. The modular valve block system (2) according to one of the preceding claims, wherein a seal between the first and second connection geometry (14, 104; 24, 204) is designed to be elastomer-free.

6. The modular valve block system (2) according to one of the preceding claims, wherein a or the sealing portion (1116; 116) of the first or second connection geometry (14; 104; 24; 204) comprises a raised sealing contour (130) parallel to a longitudinal axis (112) of the connection adapter (100), and wherein a or the sealing portion (1116; 116) of the second or first connection geometry (24; 204; 14; 104) comprises a contact surface (1122) for the sealing contour (130) following an imaginary vertical plane of the longitudinal axis (112).

7. The modular valve block system (2) according to one of the preceding claims, wherein each sealing portion (1116; 116) is arranged between the fluid channel opening (10; 102) and the fastening portion (1114; 114).

8. The modular valve block system (2) according to one of the preceding claims, wherein the valve block system (2) comprises at least one closure adapter having a fourth connection geometry facing the valve block (4), wherein the closure adapter closes the associated fluid channel opening (10; 20) of the valve block (4), and wherein the closure adapter is attached to the valve block (4) in a pull-out-proof manner by means of the first and the fourth connection geometry.

9. The modular valve block system (2) according to claim 1, wherein the diameter of the fluid channel (12, 22) of the valve block (4) is larger than the diameter of the associated connection fluid channel (110; 210) of the connection adapter (100, 200).

## Revendications

1. Système à bloc de soupapes modulaire (2),
dans lequel une membrane est entraîné par un entraînement (32) et coopère avec un siège de soupape respectif parmi deux sièges de soupapes (6) de sorte qu'un écoulement d'un fluide de traitement s'écoulant à travers un bloc de soupapes (4) est limité,
le système à bloc de soupapes modulaire (2) comprenant :
- le bloc de soupapes (4) qui comprend au moins les deux sièges de soupapes (6) et au moins trois ouvertures de canaux de fluide (10, 20) de canaux de fluide (12, 22) respectifs qui sont reliés de manière conductrice de fluide à un siège de soupape respectif parmi les sièges de soupapes (6), dans lequel une première géométrie de raccordement (14 ; 24) se raccorde à l'ouverture de canal de fluide (10 ; 20) respective, et
- au moins trois adaptateurs de raccordement (100, 200), dans lequel un adaptateur de raccordement respectif parmi les adaptateurs de raccordement (100 ; 200) comprend deux ouvertures de canaux de fluide (102, 106 ; 202, 206) reliées entre elles par l'intermédiaire d'un canal de fluide de raccordement (110 ; 210),
dans lequel une deuxième géométrie de raccordement (104 ; 204) se raccorde à l'ouverture de canal de fluide (102 ; 202), tournée vers le bloc de soupapes (4), de l'adaptateur de raccordement (100 ; 200) respectif, dans lequel une troisième géométrie de raccordement (108 ; 208) se raccorde à l'ouverture de canal de fluide (106 ; 206), opposée au bloc de soupapes (4), de l'adaptateur de raccordement (100 ; 200) respectif, dans lequel des sections de fixation (114, 1114) de la première géométrie de raccordement (14 ; 24) et de la deuxième géométrie de raccordement (104 ; 204) comprennent des filetages venant en prise les uns dans les autres, lesquels filetages fixent l'adaptateur de raccordement (100 ; 200) respectif au bloc de soupapes (4) de manière à ce qu'il ne puisse être extrait, dans lequel une section d'étanchéité (1116 ; 116) de la première ou de la deuxième géométrie de raccordement (14 ; 104 ; 24 ; 204) maintient un élément d'étanchéité élastique (126) qui est un joint torique, et
dans lequel l'ouverture de canal de fluide (10, 20) respective du bloc de soupapes (4) et l'ouverture de canal de fluide (102, 202), tournée vers le bloc de soupapes (4), de l'adaptateur de raccordement (100, 200) respectif s'appuient l'une contre l'autre de sorte que le canal de fluide (12, 22) respectif du bloc de soupapes (4) et le canal de fluide de raccordement (110 ; 210) de l'adaptateur de raccordement (100, 200) forment un canal de fluide commun jusqu'à l'ouverture de canal de fluide (106, 206), opposée au bloc de soupapes (4), de l'adaptateur de raccordement (100, 200),
**caractérisé en ce que**
l'élément d'étanchéité élastique entoure la première ou la deuxième géométrie de raccordement (14 ; 104 ; 24 ; 204) en forme d'anneau circulaire, que la section d'étanchéité (1116 ; 116) comprend une rainure annulaire latérale dans laquelle est disposé le joint torique, lequel coopère avec une surface intérieure d'enveloppe cylindrique de la section d'étanchéité (1116 ; 116) de telle sorte que l'étanchéité du système à bloc de soupapes (2) vers l'extérieur est garantie,
que l'adaptateur de raccordement (100 ; 200) respectif comprend un contour de mise en prise latéral (120) pour un outil,
au moyen duquel l'adaptateur de raccordement (100 ; 200) respectif peut être fixé avec le couple souhaité par rapport au bloc de soupapes (4),
**que** l'outil peut venir en prise avec le contour de mise en prise latéral (120) pour réaliser un montage ou un démontage de l'adaptateur de raccordement (100) par une rotation de l'adaptateur de raccordement (100), de la deuxième géométrie de raccordement (104), de la section de fixation (114) ainsi que de la section d'étanchéité (116) autour d'un axe longitudinal (112), et
**que** le canal de fluide (12, 22) du bloc de soupapes (4) et le canal de fluide de raccordement (110 ; 210) associé de l'adaptateur de raccordement (100, 200) se prolongent l'un dans l'autre à fleur.

2. Système à bloc de soupapes modulaire (2) selon la revendication 1, dans lequel les au moins trois adaptateurs de raccordement (100, 200) sont fixés de manière amovible au bloc de soupapes (4).

3. Système à bloc de soupapes modulaire (2) selon l'une des revendications précédentes, dans lequel un évidement (36) respectif dans le bloc de soupapes (4) fournit la première géométrie de raccordement (14 ; 24) respective, et dans lequel l'évidement (36) respectif mène à l'ouverture de canal de fluide (10 ; 20) respective du bloc de soupapes (4).

4. Système à bloc de soupapes modulaire (2) selon la revendication 3, dans lequel un adaptateur de raccordement respectif parmi les adaptateurs de raccordement (100 ; 200) est inséré avec sa deuxième géométrie de raccordement (104 ; 204) dans l'évidement (36) respectif.

5. Système à bloc de soupapes modulaire (2) selon l'une des revendications précédentes, dans lequel un joint d'étanchéité entre la première et la deuxième géométrie de raccordement (14, 104 ; 24, 204) est réalisé sans élastomère.

6. Système à bloc de soupapes modulaire (2) selon l'une des revendications précédentes, dans lequel une ou la section d'étanchéité (1116 ; 116) de la première ou de la deuxième géométrie de raccordement (14 ; 104 ; 24 ; 204) comprend un contour d'étanchéité (130) en relief parallèlement à un axe longitudinal (112) de l'adaptateur de raccordement (100), et dans lequel une ou la section d'étanchéité (1116 ; 116) de la première ou de la deuxième géométrie de raccordement (24 ; 204 ; 14 ; 104) comprend une surface d'appui (1122) pour le contour d'étanchéité (130), laquelle surface d'appui suit un plan vertical imaginaire de l'axe longitudinal (112).

7. Système à bloc de soupapes modulaire (2) selon l'une des revendications précédentes, dans lequel une section d'étanchéité respective ou la section d'étanchéité (1116 ; 116) respective est disposée entre l'ouverture de canal de fluide (10 ; 102) et la section de fixation (1114 ; 114).

8. Système à bloc de soupapes modulaire (2) selon l'une des revendications précédentes, dans lequel le système à bloc de soupapes (2) comprend au moins un adaptateur de fermeture comportant une quatrième géométrie de raccordement tournée vers le bloc de soupapes (4), dans lequel l'adaptateur de fermeture ferme l'ouverture de canal de fluide (10 ; 20) associée du bloc de soupapes (4), et dans lequel l'adaptateur de fermeture est fixé au bloc de soupapes (4) au moyen de la première et de la quatrième géométrie de raccordement de manière à ne pas pouvoir être extrait.

9. Système à bloc de soupapes modulaire (2) selon la revendication 1, dans lequel le diamètre du canal de fluide (12, 22) du bloc de soupapes (4) est supérieur au diamètre du canal de fluide de raccordement (110 ; 210) associé de l'adaptateur de raccordement (100, 200).
